# EUROPEAN PATENT APPLICATION

(11) **EP 2 800 210 A2**
(43) Date of publication of application: **05.11.2014**
(21) Application number: 14163975.7
(22) Date of filing: 09.04.2014
(51) Int. Cl.: H01R 12/79

(54) **Electrical unit with electrical connector**

(30) Priority: 03.05.2013 GB 201308026
(71) Applicant: Rolls-Royce plc, London SW1E 6AT (GB)
(72) Inventor: Summerfield, Philip, Derby, Derbyshire DE23 6JX (GB)
(74) Representative: Hill, Matthew Ross

(57) **Abstract**

An electrical unit comprises an electrical connector having a set of elongate electrical terminals which are each a one-piece component. The terminals extend into the unit such that first ends of the terminals are connected to multiple electrical conductors within the unit and second ends of the terminals project from a surface of the unit. A collar is formed at the surface of the unit to at least partially encircle the projecting second ends. This arrangement allows the unit to be electrically connected at the electrical connector by press fitting to a terminating region of a flexible electrical harness, the collar defining a recess in which the terminating region is located.

## Description

The present invention relates to electrical units with electrical connectors, the units being usable on a gas turbine engine.

A typical gas turbine engine has a substantial number of electrical components which serve, for example, to sense operating parameters of the engine and/or to control actuators which operate devices in the engine. Such devices may, for example, control fuel flow, variable vanes and air bleed valves. The actuators may themselves be electrically powered, although some may be pneumatically or hydraulically powered, but controlled by electrical signals.

Electrical power, and signals to and from the individual electrical components, is commonly transmitted along conductors. Conventionally, such conductors may be in the form of wires and/or cables which are assembled together in a harness. In such a conventional harness, each wire may be surrounded by an insulating sleeve, which may be braided or have a braided cover.

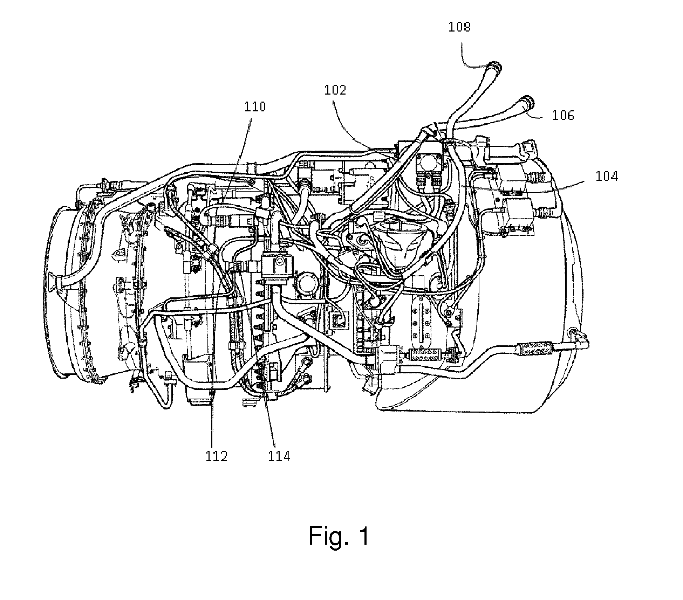

By way of example, Figure 1 of the accompanying drawings shows a typical gas turbine engine including two conventional wiring harnesses 102, 104, each provided with a respective connector component 106, 108 for connection to circuitry, which may be for example accommodated within the airframe of an aircraft in which the engine is installed.

The harnesses 102, 104 are assembled from individual wires and cables which are held together over at least part of their lengths by suitable sleeving and/or braiding. Individual wires and cables, for example those indicated at 110, emerge from the sleeving or braiding to terminate at plug or socket connector components 112 for cooperation with complementary socket or plug connector components 114 on, or connected to, the respective electrical components.

Each conventional harness 102, 104 comprises a multitude of insulated wires and cables. This makes the conventional harness itself bulky, heavy and difficult to manipulate. The conventional harnesses occupy significant space within a gas turbine engine (for example within the nacelle of a gas turbine engine), and thus may compromise the design of the aircraft, for example the size and/or weight and/or shape of the nacelle.

Conventional harnesses comprise a large number of components, including various individual wires and/or bundles of wires, supporting components (such as brackets or cables) and electrical and/or mechanical connectors. This can make the assembly process complicated (and thus susceptible to errors) and/or time consuming. Disassembly of the conventional harnesses (for example removal of the conventional harnesses from a gas turbine engine during maintenance) may also be complicated and/or time consuming. Thus, in many maintenance (or repair or overhaul) procedures on a gas turbine engine, removal and subsequent refitting of the conventional electrical harness may account for a very significant portion of the operation time and/or account for a significant proportion of the potential assembly errors.

The electrical conductors in the conventional harnesses may be susceptible to mechanical damage. For example, mechanical damage may occur during installation (for example through accidental piercing of the protective sleeves/braiding) and/or during service (for example due to vibration). In order to reduce the likelihood of damage to the conductors in a conventional harness, the protective sleeves/braiding may need to be further reinforced, adding still further weight and reducing the ease with which they can be manipulated. Similarly, the exposed electrical connectors used to connect one conductor to another conductor or conductors to electrical units may be susceptible to damage and/or may add significant weight to the engine.

It would be desirable to have improved connections between electrical components.

In a first aspect, the present invention provides a rigid electrical raft for forming part of an electrical system (for example an electrical harness) of a vehicle comprising:
a rigid material having a flexible printed circuit embedded therein, the flexible printed circuit comprising multiple electrical conductors
an electrical connector having a set of elongate electrical terminals which are each a one-piece component, the terminals extending into the raft such that first ends of the terminals are connected to the multiple electrical conductors of the flexible printed circuit embedded in the raft and second ends of the terminals project from a surface of the raft, thereby allowing the raft to be electrically connected to a terminating region of a flexible electrical harness formed from a flexible printed circuit board which provides a plurality of conductive tracks and has one or more receiving holes in the terminating region extending to respective conductive tracks of the harness, the terminating region making a detachable press fit connection to the electrical connector, by which connection the second ends of the elongate terminals are received in the receiving holes to directly electrically connect the terminals with the conductive tracks;
wherein a collar is formed at the surface of the raft to at least partially encircle the projecting second ends, the collar defining a recess in which the terminating region is located when it is press fitted to the electrical connector.

The terminals may be embedded in the rigid material.

By extending the elongate electrical terminals into the raft, it is possible to integrate the connector with the raft, providing protection to at least the first ends of the terminals. The connector can also provide a simple, detachable and robust connection to flexible electrical harnesses which does not significantly expand the space envelope of the raft. Further, both the connector and the terminating region of the electrical harness can be of low mass, resulting in good vibrational characteristics for the connection therebetween which will tend not to respond to high displacement, low frequency vibrations.

Indeed, in a second aspect, the present invention provides an assembly of an electrical raft according to the first aspect, and a flexible electrical harness formed from a flexible printed circuit board which provides a plurality of conductive tracks and has one or more receiving holes in a terminating region of the harness, the holes extending to respective conductive tracks of the harness;
wherein the terminating region makes a press fit connection to the electrical connector, by which connection the terminating region is located in the recess and the second ends of the elongate terminals are received in the receiving holes to directly electrically connect the terminals with the conductive tracks.

In a third aspect, the present invention provides a gas turbine engine or gas turbine engine installation, having the electrical raft of the first aspect, or the assembly of an electrical raft and a flexible electrical harness according to the second aspect. For example, the electrical raft may be a first engine installation component, and the gas turbine engine or gas turbine engine installation may further comprise a second engine installation component having electrical conductors. The flexible electrical harness can then connect between the electrical raft and the second engine installation component so as to electrically connect electrical conductors of the electrical raft with electrical conductors of the second engine installation component. The second engine installation component may be as described elsewhere herein, for example an electrical rigid raft, an Electronic Control Unit (ECU), such as an electronic engine controller (EEC), or Engine Health Monitoring Unit (EMU).

In a fourth aspect, the present invention provides a method of manufacturing (including assembling, repairing, reassembling and/or overhauling) a gas turbine engine comprising: attaching an electrical raft according to the first aspect to the engine, and electrically connecting the flexible electrical harness by press fitting the terminal region of the harness to the connector of the raft.

Optional features of the invention of the first aspect will now be set out.

The collar may project further from the surface of the raft than the projecting second ends. This can help to protect the elongate terminals when the terminating region is detached from the electrical connector.

Conveniently, the collar has an opening for passage of the harness therethrough. In this way, the terminating region can reach the elongate terminals without the harness interfering with the collar, and also the terminating region can be presented in a correct orientation to the terminals.

The collar may have one or more fastening formations, such as threaded holes and corresponding bolts or screws, other thread formations, bayonet formations etc., which are operable to prevent the terminating region from being detached from the electrical connector.

Transferring electrical signals using the embedded electrical system of the rigid raft can provide a number of advantages over transferring electrical signals using a conventional harness. For example, during assembly and in use, the raft may provide greater protection to its electrical conductors than a conventional harness. Further, the rigid material in which the conductors are embedded may provide greater protection (for example greater mechanical protection) to the embedded conductors, e.g. due to being resistant to breaking and/or snapping and/or piercing and/or puncturing. The electrical raft may provide improved protection to the electrical conductors during manufacture/assembly of the raft/gas turbine installation, and/or during service/operation/maintenance of the gas turbine engine. This may result in lower maintenance costs, for example due to fewer damaged components requiring replacement/repair and/or due to the possibility of extending time intervals (or service intervals) between inspecting the electrical system, e.g. compared with a system using only conventional harnesses. Further, the use of such a raft may significantly reduce the build and maintenance times of an engine, and/or reduce the possibility of errors occurring during such procedures. The raft can also provide weight and size advantages over a conventional harness.

The rigid electrical raft may be referred to as an electrical raft, a rigid electrical panel, a rigid electrical harness raft, or a rigid electrical harness panel, these terms being interchangeable as used herein. Similarly, the terms raft and panel may be interchangeable as used herein.

The rigid material may be a rigid polymer matrix composite material.

The rigid material may contain layers of continuous reinforcing fibres, as discussed below.

The collar may be integrally formed from the rigid material of the raft. During use this can help to prevent the passage of fluids (e.g. oil or fuel) and debris into the connector where they might interfere with the electrical connections. Alternatively, however, the collar can be formed as a separate component that is fixed to the raft.

Optional features of the invention of the second aspect will now be set out.

The terminating region may make direct contact with the surface of the raft in the recess. Such an arrangement can simplify the press fit connection of the terminating region to the electrical connector.

The terminating region may have a core layer through which the conductive tracks extend and a first elastomer layer which is positioned between the core layer and the surface of the raft, the receiving holes extending through both the core layer and the first elastomer layer. The first elastomer layer can then be compressed by the press fit connection of the terminating region to the electrical connector, forming a seal between the terminating region and the surface of the raft. Such a seal can be particularly effective at preventing ingress of fluids and debris during use.

The terminating region may have a cap at the side thereof distal from the surface of the raft, the cap having complimentary fastening formations to the fastening formations of the collar for joining the cap to the collar and thereby preventing the terminating region from being detached from the electrical connector. For example, when the fastening formations of the collar are threaded holes and corresponding bolts or screws, the complimentary fastening formations may be matching holes which for accepting the bolts or screws therethrough. However, other collar fastening formations and cap complimentary fastening formations are possible. For example, the cap may join to the collar by ¼ turn fasteners, captive fasteners, bayonet formations, a threaded cap, a spring-loaded cap etc.

The terminating region may have a second elastomer layer which is positioned between the core layer and the cap. The second elastomer layer can then be compressed by the joining of the cap to the ridge, forming a seal between the terminating region and the cap. This further seal can also help to prevent ingress of fluids and debris during use.

Further optional features and advantages of the invention will now be set out. The further optional features are applicable singly or in any combination with any aspect of the invention, and pertain particularly to an electrical raft.

In general, the use of one or more electrical rafts/electrical raft assemblies may significantly reduce build time of an engine. For example, use of electrical rafts/electrical raft assemblies may significantly reduce the part count involved in engine assembly compared with a conventional harness arrangement. The number and/or complexity of the operations required to assemble an engine (for example to assemble/install the electrical system (or network) and/or other peripheral components, which may be referred to in general as engine dressing) may be reduced. For example, rather than having to install/assemble a great number of wires and/or wiring looms together on the engine installation, it may only be necessary to attach a relatively small number of electrical rafts/electrical raft assemblies, which themselves may be straightforward to handle, position, secure and connect. Thus, use of electrical raft assemblies in a gas turbine installation may reduce assembly time and/or reduce the possibility of errors occurring during assembly.

Use of electrical raft assemblies may provide significant advantages during maintenance, such as repair and overhaul. As discussed above, the electrical rafts may be particularly quick and straightforward to assemble. The same advantages discussed above in relation to assembly apply to disassembly/removal from the gas turbine engine. Thus, any repair/overhaul that requires removal of at least a part of the electrical harness may be simplified and/or speeded up through use of electrical rafts as at least a part of the electrical harness, for example compared with conventional harnesses. Use of electrical rafts (for example as part of one or more electrical raft assemblies) may allow maintenance procedures to be advantageously adapted. For example, some maintenance procedures may only require access to a certain portion of the gas turbine engine that only requires a part of the harness to be removed. It may be difficult and/or time consuming, or not even possible, to only remove the required part of a conventional harness from a gas turbine engine. However, it may be relatively straightforward to only remove the relevant electrical raft, for example by simply disconnecting it from the engine and any other electrical rafts/components to which it is connected. Decreasing maintenance times has the advantage of, for example, reducing out-of service times (for example off-wing times for engines that are used on aircraft).

The build/assembly times may be additionally or alternatively reduced by pre-assembling and/or pre-testing individual and/or combinations of electrical rafts and/or electrical raft assemblies prior to engine assembly. This may allow the electrical and/or mechanical operation of the electrical rafts to be proven before installation, thereby reducing/eliminating the testing required during engine installation.

The electrical rafts/electrical raft assemblies may be a particularly lightweight solution for transferring electrical signals around an engine. For example, an electrical raft may be lighter, for example significantly lighter, than a conventional harness required to transmit a given number of electrical signals. A plurality of conductors may be embedded in a single electrical raft, whereas in a conventional arrangement a large number of heavy, bulky wires, usually with insulating sleeves, would be required. The reduced weight may be particularly advantageous, for example, when used on gas turbine engines on aircraft.

Electrical rafts may be more easily packaged and/or more compact, for example than conventional harnesses. Indeed, as mentioned above, the electrical rafts can be made into a very wide range of shapes as desired. This may be achieved, for example, by manufacturing the electrical rafts using a mould conforming to the desired shape. As such, each electrical raft may be shaped, for example, to turn through a tighter corner (or smaller bend radius) than a conventional harness. The electrical rafts may thus provide a particularly compact solution for transferring electrical signals around a gas turbine engine. The electrical rafts may be readily shaped to conform to neighbouring components/regions of a gas turbine engine, for example components/regions to which the particular electrical raft assembly is attached, such as a fan casing or a core casing.

The electrical raft(s) may provide improved protection to the electrical conductors during manufacture/assembly of the raft/gas turbine installation, and/or during service/operation/maintenance of the gas turbine engine. This may result in lower maintenance costs, for example due to fewer damaged components requiring replacement/repair and/or due to the possibility of extending time intervals (or service intervals) between inspecting the electrical system, for example compared with a system using only conventional harnesses.

Any suitable material may be used for the rigid material of the electrical raft. For example, the rigid material may be a rigid composite material, such as an organic matrix composite. Such a rigid composite material may be particularly stiff and/or lightweight. Thus, a rigid composite raft may be used that has suitable mechanical properties, whilst being thin and lightweight, for example compared with some other materials. The rigid composite material may comprise any suitable combination of resin and fibre as desired for a particular application. For example, any of the resins and/or fibres described herein may be used to produce a rigid composite material for the electrical raft. Any suitable fibres may be used, for example carbon fibres, glass fibres, aramid fibres, and/or para-aramid fibres. The fibres may be of any type, such as woven and/or chopped. Any suitable resin may be used, for example epoxy, BMI (bismaleimide), PEEK (polyetheretherketone), PTFE (polytetraflouroethylene), PAEK (polyaryletherketone), polyurethane, and/or polyamides (such as nylon).

In any example of electrical raft or electrical raft assembly, at least one of the electrical conductors embedded in the electrical raft may be an electrically conductive wire. The or each electrically conductive wire may be surrounded by an electrically insulating sleeve.

At least some (for example a plurality) of the electrical conductors may be provided in a flexible printed circuit (FPC). Thus, at least some of the electrical conductors may be provided as electrically conductive tracks in a flexible substrate. The flexible printed circuit may be flexible before being embedded in the rigid material.

Providing the electrical conductors as tracks in a flexible printed circuit may allow the size of the resulting electrical raft to be reduced further and/or substantially minimized. For example, many different electrical conductors may be laid into a flexible printed circuit in close proximity, thereby providing a compact structure. The flexible substrate of a single flexible printed circuit may provide electrical and/or mechanical protection/isolation to a large number of electrical conductors.

Any given electrical raft may be provided with one or more electrical wires embedded therein (which may be sheathed) and/or one or more flexible printed circuits embedded therein. As such, a given electrical raft may have wires and flexible printed circuits laid therein.

It will be appreciated that the embedded electrical conductors (whether they are provided as embedded electrical wires or as conductive tracks in a flexible printed circuit embedded in the rigid material) may be described as being fixed in position by the rigid material, for example relative to the rest of the electrical harness raft. It will also be appreciated that the embedded electrical conductors may be said to be surrounded by the rigid material and/or buried in the rigid material and/or integral with (or integrated into) the rigid material.

The electrical raft (or electrical raft assembly) may be at least a part of an electrical harness for a gas turbine engine, and thus may be referred to herein as an electrical harness raft (or electrical harness raft assembly).

An electrical raft (or electrical raft assembly) may comprise a fluid passage. Such a fluid passage may be embedded therein and/or otherwise provided thereto. The fluid passage may be part of a fluid system, such as a gas (for example pneumatic or cooling gas/air) and/or liquid (for example a fuel, hydraulic and/or lubricant liquid).

There is also provided a method of assembling an electrical raft assembly and/or a gas turbine engine. The method comprises preparing an electrical raft assembly as described above and elsewhere herein. The method also comprises electrically and mechanically connecting the prepared electrical raft assembly to the rest of the apparatus/gas turbine engine.

Thus, there is provided a gas turbine engine or gas turbine engine installation (for example for an airframe) comprising an electrical raft and/or an electrical raft assembly as described above and elsewhere herein. For example, at least one electrical raft and/or electrical raft assembly may be used as part of an electrical harness for transferring electrical signals around the engine, in the form of electrical harness raft(s) and/or electrical harness raft assemblies.

The electrical raft may comprise one or more electrical connectors (which, as well as the type described above in relation to the first aspect, may be of other type) or sockets, which may be electrically connected to at least one of the embedded electrical conductors. The electrical connector or socket may allow electrical connection of the electrical raft to other electrical components, for example to other electrical rafts (either directly or indirectly, via an electrical cable or lead) or to electrical units (again, either directly or indirectly, via an electrical cable or lead). Such an electrical connector or socket may take any suitable form, and may be at least partially embedded in the rigid electrical raft.

The electrical raft may be a first engine installation component, and the gas turbine engine may further comprise a second engine installation component having electrical conductors. The gas turbine engine may further comprise at least one flexible cable, such as the flexible harness, connected between the electrical raft and the second engine installation component so as to electrically connect electrical conductors of the electrical raft with electrical conductors of the second engine installation component.

The second engine installation component may be, for example, an ECU, such as an EMU or EEC. Additionally or alternatively, the second engine installation component may be a further electrical raft or electrical raft assembly.

Connectors of the type described in relation to the first aspect may be used to connect the flexible cable between engine installation components (which may be electrical units, including electrical rafts).

The environment of a gas turbine engine during operation may be particularly severe, with, for example, high levels of vibration and/or differential expansion between components as the temperature changes through operation and as the components move relative to each other. Providing at least one flexible cable to connect electrical units (including electrical rafts) together may allow the electrical units/rafts and/or components to accommodate vibration and/or relative movement, for example of the component(s)/assemblies to which they are attached/mounted during use. For example, the flexible cable(s) (where present) used to electrically connect electrical units/raft assemblies to other component(s) may have sufficient length to accommodate such vibration and/or movement during use.

For example, providing separate (for example more than one) electrical units/raft assemblies and connecting at least some (for example at least two) of them together using at least one flexible cable may allow the electrical units/rafts to accommodate vibration and/or relative movement of the component(s)/assemblies to which they are attached/mounted during use.

The electrical signals transferred by the conductors in the electrical raft, and around the engine using the electrical rafts/raft assemblies may take any form. For example, the electrical signals may include, by way of non-limitative example, electrical power and/or electrical control/communication signals and/or any other type of transmission through an electrical conductor. Transmission of signals around the engine may mean transmission of signals between (to and/or from) any number of components/systems in the engine and/or components/system of a structure (such as an airframe) to which the gas turbine engine is (or is configured to be) connected/installed in. In other words, an electrical raft may be used to transfer/communicate any possible combination of electrical signals in any part of a gas turbine engine installation or a related (for example electrically and/or mechanically connected) structure/component/system.

An electrical raft or raft assembly may be provided in any suitable location/position of the gas turbine engine, for example to a mounting structure at any suitable location. For example, the gas turbine engine may comprise a bypass flow duct formed between an engine core and an engine fan casing (the gas turbine engine may be a turbofan engine, for example); and the electrical raft assembly may form at least a part of a radially extending splitter (which may be referred to as a bifurcation) that extends across the bypass flow duct. In this way, an electrical raft (which may be referred to as a splitter electrical raft) may provide an electrical connection between a fan casing and an engine core. By way of further example, the electrical raft assembly may be attached to the engine core case or engine fan case, for example to a mounting structure on such cases.

Other components/systems of a gas turbine engine may be provided to an electrical raft assembly in any suitable manner. For example, such other components/systems may be mounted on one or more electrical raft assemblies. Thus, a surface of an electrical harness raft may be used as a mounting surface for other gas turbine engine components/systems, such as ancillary/auxiliary components/systems.

For example, an electrical unit may be mounted on an electrical raft. The electrical unit may be any sort of electrical unit, for example one that may be provided to a gas turbine engine. For example, the electrical unit may be any type of electronic control unit (ECU), such as an Electronic Engine Controller (EEC) and an Engine Health Monitoring Unit (EMU). At least one (i.e. one or more) electrical unit may be attached to an electrical raft. Such an electrical raft assembly may be a particularly convenient, lightweight and/or compact way of providing (for example attaching, fixing or mounting) an electrical unit to a turbine engine. For example, the electrical unit and the electrical raft may be assembled together (mechanically and/or electrically) before being installed on the gas turbine engine, as described elsewhere herein.

An electrical raft may be provided with at least one mount on which other components (for example auxiliary/ancillary components/systems) of the gas turbine engine are (or may be) mounted. The mount may be a bracket, for example a bespoke bracket for the component/system mounted thereon or a conventional/standard bracket. The electrical raft may provide a stable, regular and convenient platform on which to mount the various systems/components. The combination of the installed electrical raft assembly with components/systems mounted thereon may be much more compact and/or straightforward to assemble and/or have a greatly reduced number of component parts, for example compared with the corresponding conventional electrical harness and separately mounted components/systems.

The mounts may be used to attach any component/system to an electrical raft (and thus to the engine) as required. For example, fluid pipes for transferring fluid around the engine may be mounted to the electrical rafts (for example mechanically mounted using a bracket), and thus to the engine. More than one set of fluid pipes, for example for carrying different or the same fluids, may be mounted on the same electrical raft.

An anti-vibration mount may be used to attach an electrical raft to another component, thereby allowing the electrical raft to be vibration isolated (or at least substantially vibration isolated). Using an anti-vibration mount to attach an electrical raft/assembly to a gas turbine engine for example may reduce (or substantially eliminate) the amount (for example the amplitude and/or the number/range of frequencies) of vibration being passed to the electrical raft from the gas turbine engine, for example during use. This may help to prolong the life of the electrical raft. Furthermore, any other components that may be attached to the electrical raft (as discussed above and elsewhere herein) may also benefit from being mounted to the gas turbine engine via the anti-vibration mounts, through being mounted on the electrical raft. For example, the reduced vibration may help to preserve the electrical contact between the electrical raft and any electrical unit connected thereto. As such, any components (such as an electrical unit mounted to the electrical raft) that would conventionally be mounted directly to the gas turbine engine and require at least a degree of vibration isolation no longer require their own dedicated anti-vibration mount. Thus, the total number of anti-vibration mounts that are required to assemble an engine may be reduced. This may reduce the number of parts required and/or the time taken to assemble an engine or engine installation and/or reduce the total assembled weight and/or reduce the likelihood of errors occurring during assembly.

Furthermore, components that are conventionally mounted to an engine without anti-vibration mounts (for example because of the weight and/or cost penalty), but which are now mounted to an electrical raft (for example to a mounting surface of the electrical raft), may benefit from vibration isolation without any weight/cost/assembly time penalty. This may reduce the possibility of damage occurring to such components and/or increase their service life. Such components may include, for example, ignitor boxes (used to provide high voltage power to engine ignitors), and pressure sensors/switches, for example for fluid systems such as oil, air, fuel, pneumatics and/or hydraulics.

Further optional features of the invention are set out below.

Embodiments of the invention will now be described by way of example with reference to the accompanying drawings in which:
Figure 1 shows a gas turbine engine with a conventional harness;
Figure 2 shows a cross-section through a gas turbine engine in accordance with the present invention;
Figure 3 shows a perspective view of a flexible printed circuit;
Figure 4 shows a side view of the flexible printed circuit of Figure 3;
Figure 5 shows a schematic of an electrical raft prior to assembly;
Figure 6 shows a cross-section normal to the axial direction through a gas turbine engine in accordance with the present invention;
Figure 7 shows schematically a portion of an electrical harness formed from a flexible printed circuit board;
Figure 8 shows schematically a cross-sectional view of an assembly of an electrical raft and a flexible electrical harness of the type shown in Figure 7; and
Figure 9 shows schematically a plan view of the raft of Figure 8, without the harness of Figure 7.

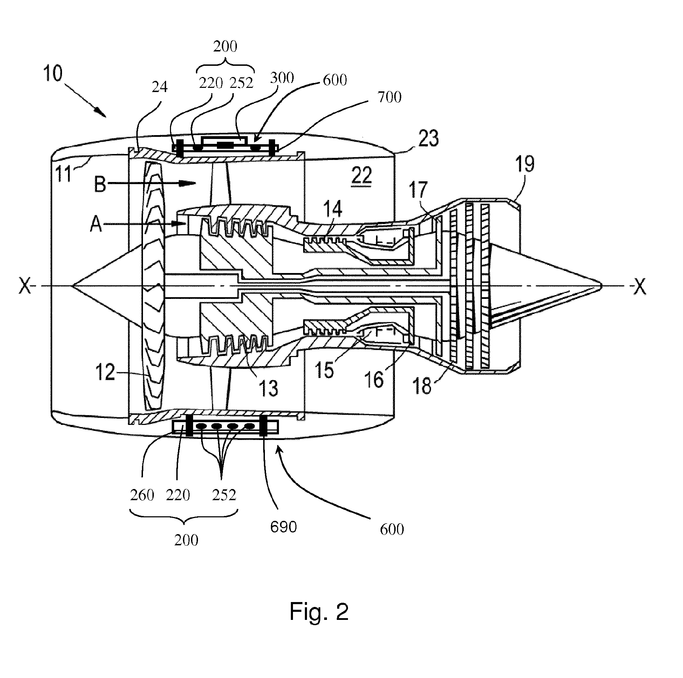

With reference to Figure 2, a ducted fan gas turbine engine generally indicated at 10 has a principal and rotational axis X-X. The engine 10 comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. The engine also has a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts.

The gas turbine engine 10 shown in Figure 2 shows two electrical raft assemblies 600 according to the invention. As such, the gas turbine engine 10 is in accordance with the present invention. Each electrical raft assembly 600 comprises an electrical raft 200. The electrical rafts 200 may be used to transmit/transfer electrical signals (or electricity, including electrical power and/or electrical control signals) around the engine and/or to/from the engine 10 from other components, such as components of an airframe. The function and/or construction of each electrical raft 200 and electrical raft assembly 600 may be as described above and elsewhere herein.

In Figure 2, each electrical raft 200 (which may be referred to herein simply as a raft 200 or an electrical harness raft 200) comprises at least one electrical conductor 252 embedded in a rigid material 220, which may be a rigid composite material.

The electrical conductors 252 in the electrical raft 200 may be provided in a harness 250, which may be a flexible printed circuit board (or FPC) 250.

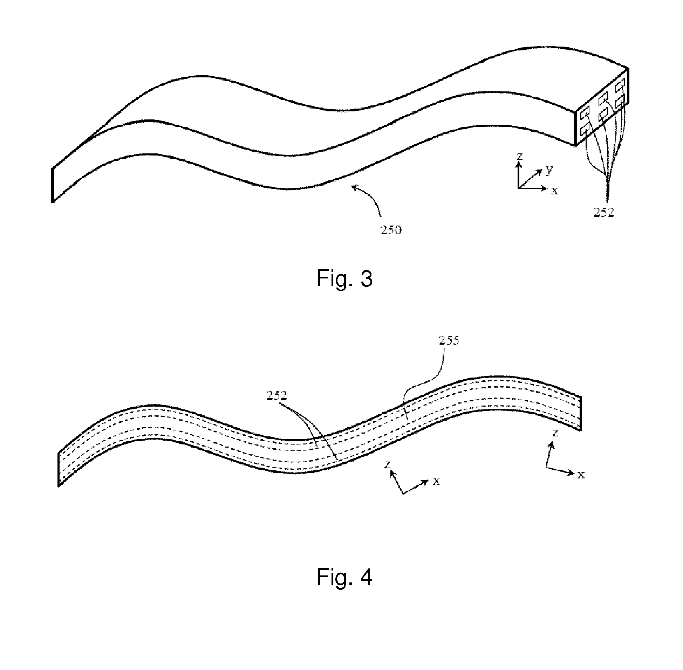

An example of an FPC 250 in which the electrical conductors 252 may be provided is shown in greater detail in Figures 3 and 4. Figure 3 shows a perspective view of the FPC 250, and Figure 4 shows a side view.

Such an FPC 250 may comprise a flexible (for example elastically deformable) substrate 255 with conductive tracks 252 laid/formed therein. The FPC 250 may thus be deformable. The FPC 250 may be described as a thin, elongate member and/or as a sheet-like member. Such a thin, elongate member may have a major surface defined by a length and a width, and a thickness normal to the major surface. In the example shown in Figures 3 and 4, the FPC 250 may extend along a length in the x-direction, a width in the y-direction, and a thickness (or depth or height) in the z-direction. The x-direction may be defined as the axial direction of the FPC. Thus, the x-direction (and thus the z-direction) may change along the length of the FPC 250 as the FPC is deformed. This is illustrated in Figure 4. The x-y surface(s) (i.e. the surfaces formed by the x and y directions) may be said to be the major surface(s) of the FPC 250. In the example shown in Figures 3 and 3, the FPC 250 is deformable at least in the z direction, i.e. in a direction perpendicular to the major surface. FPCs may be additionally of alternatively deformable about any other direction, and/or may be twisted about any one or more of the x, y, or z directions.

The flexible substrate 255 may be a dielectric. The substrate material may be, by way of example only, polyimide. As will be readily apparent, other suitable substrate material could alternatively be used.

The conductive tracks 252, which may be surrounded by the substrate 255, may be formed using any suitable conductive material, such as, by way of example only, copper, copper alloy, tin-plated copper (or tin-plated copper alloy), silver-plated copper (or silver-plated copper alloy), nickel-plated copper (or nickel-plated copper alloy) although other materials could alternatively be used. The conductive tracks 252 may be used to conduct/transfer electrical signals (including electrical power and electrical control signals) through the rigid raft assembly (or assemblies) 200, for example around a gas turbine engine 10 and/or to/from components of a gas turbine engine and/or an airframe attached to a gas turbine engine.

The size (for example the cross-sectional area) and/or the shape of the conductive tracks 252 may depend on the signal(s) to be transmitted through the particular conductive track 252. Thus, the shape and/or size of the individual conductive tracks 252 may or may not be uniform in a FPC 250.

The example shown in Figures 3 and 4 has six conductive tracks 252 running through the substrate 255. However, the number of conductive tracks 252 running through a substrate 255 could be fewer than six, or greater than six, for example tens or hundreds of tracks, as required. As such, many electrical signals and/or power transmission lines may be incorporated into a single FPC 250.

A single FPC 250 may comprise one layer of tracks, or more than one layer of tracks, for example, 2, 3, 4, 5, 6, 7, 8, 9, 10 or more than 10 layers of tracks. An FPC may comprise significantly more than 10 layers of tracks, for example at least an order of magnitude more layers of tracks. In this regard, a layer of tracks may be defined as being a series of tracks that extend in the same x-y surface. Thus, the example shown in Figures 3 and 4 comprises 2 layers of tracks, with each layer comprising 3 tracks 252.

An electrical raft 200 may be manufactured using any suitable method. For example, the rigid material 220 may initially be provided as layers of flexible material, such as (by way of example only) layers of fibre and resin compound. This flexible material may be placed into a mould, for example having a desired shape. Other components (such as fluid pipes 210 and/or the electrical conductors 252, which may be embedded in a FPC 250) may also be placed into the mould, for example between layers of the flexible material from which the rigid material 220 is ultimately formed. Parts of the mould may have any suitable form and/or construction, for example that could be readily removed when the electrical raft 200 is formed into the desired shape.

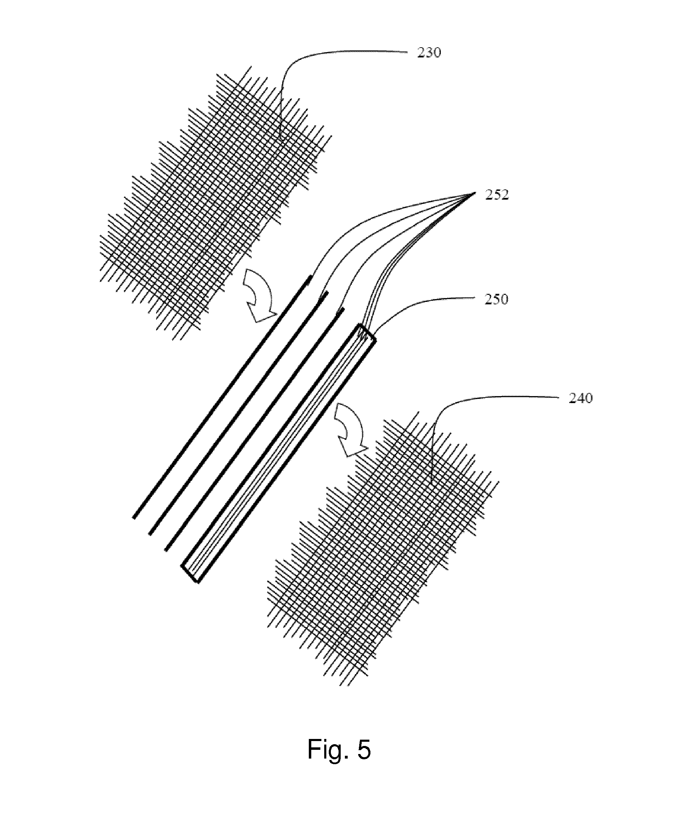

Figure 5 shows components of an example of an electrical raft 200 prior to one method of construction. The electrical conductors 252 are provided between two layers of material 230, 240 that, after construction, form the rigid material 220. Some of the electrical conductors 252 are provided in an FPC 250. The material 230, 240 may be a fibre and resin compound, as described elsewhere herein. Such a fibre and resin compound may, after suitable treatment (for example heat treatment), produce the rigid composite material 220.

In the example of Figure 5, the fibre and resin compound is formed of a sheet of interwoven fibres, or strands. The strands in Figure 5 extend in perpendicular directions, although the strands may extend in any one or more directions as required. The strands/fibres may be pre-impregnated (or "pre-pregged") with the resin.

Prior to any treatment, both the first and second layers 230, 240 and the electrical conductors 252 may be flexible, for example supple, pliable or malleable. As such, when the layers 230, 240 and the electrical conductors 252 are placed together, they may be moulded, or formed, into any desired shape. For example, the layers 230, 240 and the electrical conductors 252 may be placed into a mould (which may be of any suitable form, such as a glass or an aluminium mould) having the desired shape. The desired shape may be, for example, a shape that corresponds to (for example is offset from) a part of a gas turbine engine, such as, by way of example only, at least a part of a casing, such as an engine fan casing or engine core casing. This may enable the final raft to adopt shapes that are curved in two-dimensions or three-dimensions.

Any suitable method could be used to produce the electrical raft 200. For example, the strands/fibres need not be pre-impregnated with the resin. Instead, the fibres/strands could be put into position (for example relative to electrical conductors 252/FPC 250) in a dry state, and then the resin could be fed (or pumped) into the mould. Such a process may be referred to as a resin transfer method. In some constructions no fibre may be used at all in the rigid material 220.

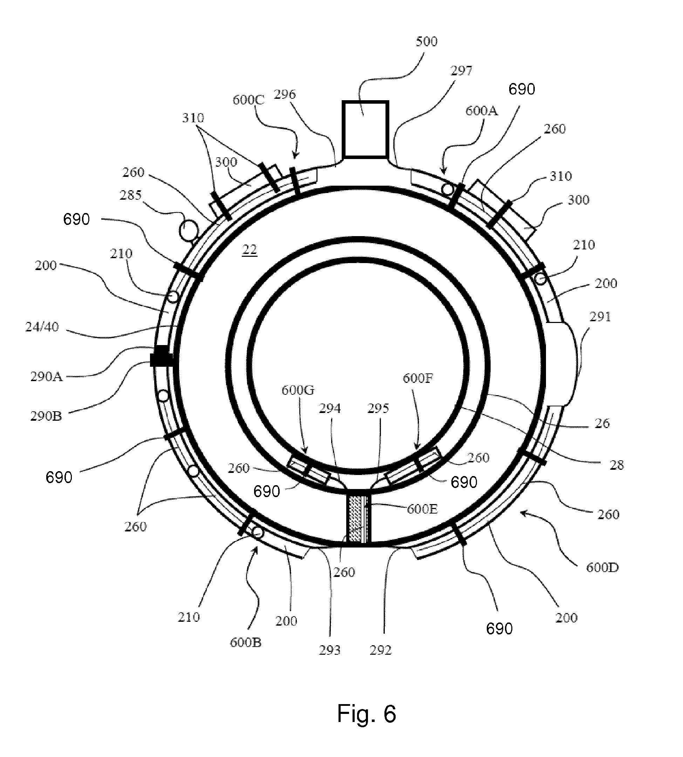

Figure 6 is a schematic showing a cross-section perpendicular to the direction X-X of a gas turbine engine comprising electrical raft assemblies 600A-600G. Any one of the electrical raft assmblies 600A-600G may comprise any or all of the features of an electrical raft assembly 600 as described above, for example. Thus, for example, any one of the electrical raft assemblies may comprise an electrical raft 200 (not labelled for raft assemblies 600E-600G for simplicity only) having electrical conductors 252 (not labelled in Figure 6 for simplicity only) embedded therein. Some or all of the electrical raft assemblies 600A-600G (which may collectively be referred to as electrical raft assemblies 600) comprise a mounting fixture for attaching the respective assembly 600 to a mounting structure 690 (such as an anti-vibration mount).

The mounting structure is part of a fan case 24 for electrical raft assemblies 600A-600D, part of a bifurcation splitter that radially crosses a bypass duct 22 for electrical raft assemblies 600E and part of an engine core case 28 for electrical raft assemblies 600F and 600G. However, it will be appreciated that an electrical raft assembly 600 could be mounted in any suitable and/or desired location on a gas turbine engine.

In Figure 6, two electrical raft assemblies 600A, 600C are shown as having an electrical unit 300 mounted on the respective electrical raft 200. However, any (or none) of the electrical raft assemblies 600A-600G may have an electrical unit 300 mounted to the respective electrical raft 200.

As mentioned herein, each of the electrical rafts 200 associated with the electrical raft assemblies 600A-600G shown in Figure 6 comprises one or more electrical conductors 252 embedded therein. However, any one or more of the electrical rafts 200 may be replaced with a raft that does not comprise electrical conductors 252. Such a raft would not be an electrical raft 200, but may otherwise be as described elsewhere herein, for example it may be a rigid raft that may have components/systems (such as, by way of example only, fluid systems, such as pipes) mounted thereon and/or embedded therein. Thus, for example, a gas turbine engine in accordance with the present invention may have a combination of electrical rafts 200 and non-electrical rafts.

The arrangement of electrical raft assemblies 600A-600G shown in Figure 6 is by way of example only. Alternative arrangements, for example in terms of number, size, shape and/or positioning, of electrical raft assemblies 600A-600G may be used. For example, there need not be seven electrical raft assemblies, the assemblies may or may not be connected together, and the rafts could be provided to (for example mounted on) any one or more components of the gas turbine engine. Purely by way of example only, connection between electrical raft assemblies 600A-600D mounted on the fan casing 24 to the electrical raft assemblies 600F, 600G mounted on the core casing 28 may be provided at least in part by means other than an additional electrical raft assembly 600E, for example using wire conductors with insulating sleeves. By way of further example, one or more electrical raft assemblies 600 may additionally or alternatively be provided to the nose cone, structural frames or elements within the engine (such as "A-frames"), the nacelle, the fan cowl doors, and/or any connector or mount between the gas turbine engine 10 and a connected structure (which may be at least a part of a structure in which the gas turbine engine 10 is installed), such as the pylon 500 between the gas turbine engine 10 and an airframe (not shown).

Any one or more of the electrical rafts of the electrical raft assemblies 600A-600G may have a fluid passage 210 embedded therein and/or provided thereto. The fluid passage 210 may be part of a fluid system, such as a gas (for example pneumatic or cooling gas/air) and/or liquid (for example a fuel, hydraulic and/or lubricant liquid). In the Figure 6 example, three of the electrical rafts (of electrical raft assemblies 600A, 600B, 600C) comprise a fluid passage 210 at least partially embedded therein. The electrical raft of assembly 600C also has a fluid passage 285 (which may be for any fluid, such as those listed above in relation to embedded passage 210) mounted thereon. Such a mounted fluid passage 285 may be provided to any electrical raft, such as those of electrical raft assemblies 600A-600G shown in Figure 6. The fluid passages 210, 285 shown in Figure 6 may be oriented in an axial direction of the engine 10. However, fluid passages may be oriented in any direction, for example axial, radial, circumferential or a combination thereof.

Any of the electrical raft assemblies 600A-600G (or the respective electrical rafts 200 thereof) may have any combination of mechanical, electrical and/or fluid connections to one or more (for example 2, 3, 4, 5 or more than 5) other components/systems of the gas turbine engine 10 and/or the rest of the gas turbine engine 10. Examples of such connections are shown in Figure 6, and described below, but other connectors may be used. For example, electrical raft assemblies 600 (and/or non-electrical rafts) may be connected together (or to other components) using any combination of electrical, fluid and/or mechanical connectors. Thus, any of the connections 290A/290B, 291-297 shown in Figure 6 may be any combination of electrical, fluid and/or mechanical connection. Alternatively, electrical raft assemblies 600 (and/or non-electrical rafts) may be standalone, and thus may have no connection to other rafts or components.

A connection 291 is shown between the electrical rafts of the assemblies 600A and 600D. The connection 291 may comprise an electrical connection. Such an electrical connection may be flexible and may, for example, take the form of a flexible printed circuit such as the flexible printed circuit 250 shown in Figures 3 and 4. Such a flexible electrical connection may be used to electrically connect any electrical raft assembly 600 to any other component, such as another electrical raft assembly 600. A connection 297 (which may be or comprise an electrical connection) is provided between the electrical raft of the assembly 600A and a part of an airframe, or airframe installation 500, which may, for example, be a pylon. Similarly, a fluid and/or mechanical connection 296 may additionally or alternatively be provided between the airframe 500 and another electrical raft of the assembly 600C. As shown in Figure 6, other electrical and/or fluid connections 292, 293, 294, 295 may be provided between electrical rafts 200 (or assemblies 600) and other components, such as other electrical rafts 200 (or assemblies 600).

A direct connection 290A, 290B may be provided, as shown for example between the electrical rafts of the assemblies 600B and 600C in the Figure 6 arrangement. Such a direct connection 290A, 290B may comprise a connector 290A provided on (for example embedded in) one electrical raft 200 connected to a complimentary connector 290B provided on (for example embedded in) another electrical raft 200. Such a direct connection 290A, 290B may, for example, provide fluid and/or electrical connection between the two electrical rafts assemblies 600B, 600C.

An electrical raft 200 may have an electrically conductive grounding or screen layer 260, as shown in the electrical rafts 200 shown in Figure 6. However, it will be appreciated that electrical rafts 200 according to the invention and/or for use with the invention need not have such an electrically conductive grounding or screen layer 260. Where an electrically conductive grounding or screen layer 260 is present, an electrically conductive fastener 310 may be used to fasten, or fix, the electrical unit 300 (where present) to the electrical raft 200. This may allow the electrical unit 300 to be electrically grounded. It will also be appreciated, however, that electrical rafts 200 according to the invention and/or for use with the invention need not have such an electrically conductive fastener 310.

Where reference is made herein to a gas turbine engine, it will be appreciated that this term may include a gas turbine engine/gas turbine engine installation and optionally any peripheral components to which the gas turbine engine may be connected to or interact with and/or any connections/interfaces with surrounding components, which may include, for example, an airframe and/or components thereof. Such connections with an airframe, which are encompassed by the term "gas turbine engine" as used herein, include, but are not limited to, pylons and mountings and their respective connections. The gas turbine engine itself may be any type of gas turbine engine, including, but not limited to, a turbofan (bypass) gas turbine engine, turbojet, turboprop, ramjet, scramjet or open rotor gas turbine engine, and for any application, for example aircraft, industrial, and marine application. Electrical raft assemblies 600 such as any of those described and/or claimed herein may be used as part of any apparatus, such as any vehicle, including land, sea, air and space vehicles, such as motor vehicles (including cars and busses), trains, boats, submarines, aircraft (including aeroplanes and helicopters) and spacecraft (including satellites and launch vehicles).

It will be appreciated that many alternative configurations and/or arrangements of electrical raft assemblies 600 and gas turbine engines 10 comprising electrical raft assemblies 600 other than those described herein may fall within the scope of the invention. For example, alternative arrangements of electrical raft assemblies 600 (for example in terms of the arrangement, including number/shape/positioning/constructions, of mounting fixtures, the arrangement/shape/positioning/construction of the electrical rafts 200, the type and/or positioning of components (if any) mounted to/embedded in the electrical rafts 200, the rigid material 220 and the electrical conductors 252) may fall within the scope of the invention and may be readily apparent to the skilled person from the disclosure provided herein. Alternative arrangements of connections (for example mechanical, electrical and/or fluid) between the electrical (or non-electrical) rafts and/or raft assemblies and between the electrical (or non-electrical) rafts or raft assemblies and other components may fall within the scope of the invention and may be readily apparent to the skilled person from the disclosure provided herein. Furthermore, any feature described and/or claimed herein may be combined with any other compatible feature described in relation to the same or another embodiment.

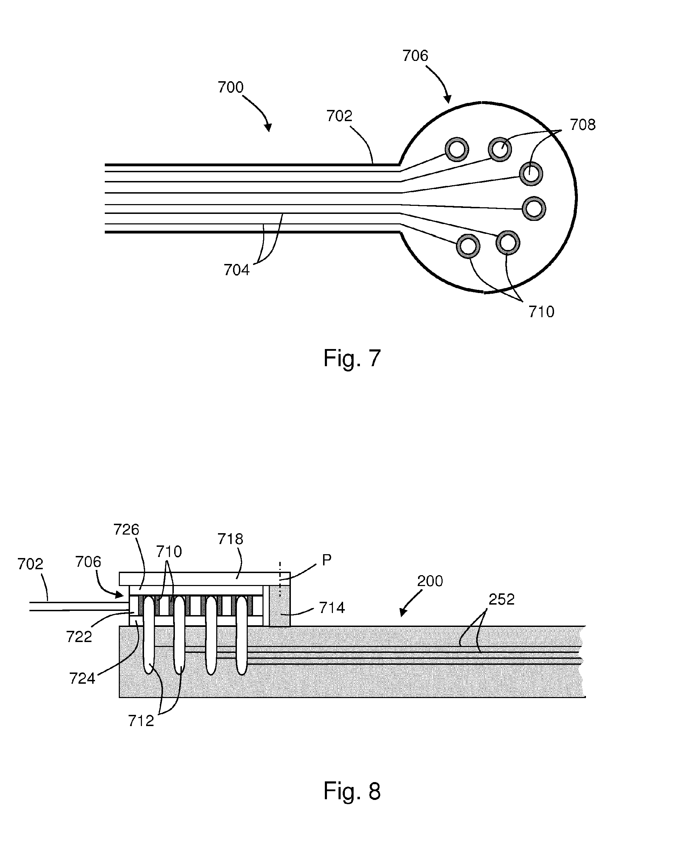

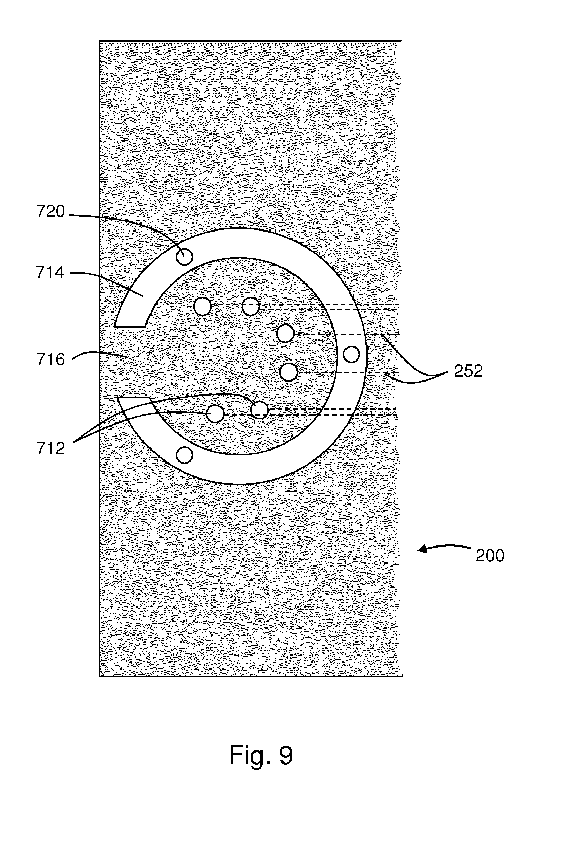

The electrical rafts, or indeed other electrical units such as, for example, ECUs, EECs or EMUs, may have electrical connectors for making connections to their electrical conductors, and thereby electrically connecting the rafts/other units with other rafts or electrical units. In particular, the connectors may join to flexible electrical harnesses which mediate the connection to other rafts or units. Figure 7 shows schematically a portion of a flexible electrical harness 700 formed from a flexible printed circuit board 702 which provides a plurality of conductive tracks 704, optionally in multiple layers. The portion ends at a planar, disc-shaped terminating region 706, or "lollipop", in which the conductive tracks fan out and join to respective receiving holes 708 which penetrate through the terminating region perpendicularly to the plane of the region. The holes are internally plated with an electrically conductive layer 710. Figure 8 shows a schematic cross-sectional view of an assembly of an electrical unit which is an electrical raft 200 and a flexible electrical harness 700, of the type shown in Figure 7. Figure 9 shows a schematic plan view of the raft of Figure 8, without the harness.

Electrical conductors 252 in the form of one or more FPCs 250 are embedded in the raft 200 and extend substantially parallel to the plane of the raft. The conductors are electrically connected to first ends of a set of elongate electrical terminals 712, which are also embedded in the raft, e.g. during the manufacture thereof. This arrangement protects the connection between the conductors and the terminals, and can also accurately determine the position of the terminals. The second ends of the terminals project from a surface of the raft. Each terminal is a one-piece component, which can improve its robustness, reliability and lightness.

To provide protection to the second ends of the terminal 712, a collar 714 formed on the surface of the raft surrounds the terminals, the collar projecting further from the surface of the raft than the second ends. The collar can be integrally formed with the raft, or fixed subsequently thereto as a separate component.

The collar 714 defines a circular recess within which the second ends of the terminals 712 are located, and together with the terminals provides an electrical connector for connecting the terminating region 706 to the raft so that the conductive tracks 704 can communicate with the conductors 252. More particularly, the terminating region 706 can be detachably push fitted onto the connector so that the second ends of the terminals penetrate the plated receiving holes 708 of the terminating region. The collar has an opening 716 allowing the harness 700 to pass therethrough. As well as preventing the harness from interfering with the collar, the opening also ensures that the terminating region is presented in a correct orientation to the terminals.

To protect the terminating region 706 and the electrical connector provided by the terminals 712 and the collar 714, the terminating region has a cap 718 which covers the recess formed by the collar. The cap can be fixed in position, preventing accidental detachment of the terminating region from the connector, by screws, bolts or other fasteners extending between the cap and the collar. In Figure 8, the position of one such fastener is indicated schematically by the dashed line P, and Figure 9 shows the possible positions of three threaded holes 720 for receiving such fasteners.

The terminating region 706 has first 724 and second 726 elastomer layers to either side of an insulating core layer 722 which contains the conductive tracks 704 and the plated receiving holes 708. When the terminating region is push fitted onto the electrical connector and the cap 714 is fixed in position these elastomer layers are compressed forming seals between the core layer and the surface of the raft and the core layer and the cap. In this way, debris and fluids can be prevented from contaminating the connector and interfering with its electrical effectiveness. The terminating region can make direct contact with the surface of the raft 200 via the first elastomer layer.

Both the electrical connector formed by terminals 712 and the collar 714, and the terminating region 706 of the electrical harness are of relatively low mass. This helps them not to respond to high displacement, low frequency vibrations, providing a more reliable and durable electrical connection.

Overall, the electrical connector and the terminating region 706 can provide a simple, detachable and robust connection between the raft 200 and the flexible electrical harnesses 700.

While the invention has been described in conjunction with the exemplary embodiments described above, many equivalent modifications and variations will be apparent to those skilled in the art when given this disclosure. For example, an electrical unit such as an ECU, EEC or EMU may have a similar connector at a surface thereof for connecting to the terminating region of the flexible electrical harness. As another example, the terminating region is shown as being disc-shaped in Figure 6, but could be another shape, such as square or rectangular. The recess defined by the collar 714 can then be similarly shaped to match. Accordingly, the exemplary embodiments of the invention set forth above are considered to be illustrative and not limiting. Various changes to the described embodiments may be made without departing from the spirit and scope of the invention.

## Claims

1. A rigid electrical raft (200) for forming part of an electrical system of a vehicle comprising:
a rigid material having a first flexible printed circuit (250) embedded therein, the flexible printed circuit comprising multiple electrical conductors (252); and
an electrical connector having a set of elongate electrical terminals (712) which are each a one-piece component, the terminals extending into the raft such that first ends of the terminals are connected to the multiple electrical conductors of the flexible printed circuit embedded within the raft and second ends of the terminals project from a surface of the raft, thereby allowing the raft to be electrically connected to a terminating region (706) of a flexible electrical harness (700) formed from a flexible printed circuit board (702) which provides a plurality of conductive tracks (704) and has one or more receiving holes (708) in the terminating region extending to respective conductive tracks of the harness, the terminating region making a detachable press fit connection to the electrical connector, by which connection the second ends of the elongate terminals are received in the receiving holes to directly electrically connect the terminals with the conductive tracks;
wherein a collar (714) is formed at the surface of the raft to at least partially encircle the projecting second ends, the collar defining a recess in which the terminating region is located when it is press fitted to the electrical connector.

2. An electrical raft according to claim 1, wherein the collar projects further from the surface of the raft than the projecting second ends.

3. An electrical raft according to claim 1 or 2, wherein the collar has an opening (716) for passage of the harness therethrough.

4. An electrical raft according to any one of the previous claims, wherein the collar has one or more fastening formations which are operable to prevent the terminating region from being detached from the electrical connector.

5. An electrical raft according to claim 1, wherein the terminals are embedded in the rigid material.

6. An electrical raft according to any one of the preceding claims, wherein the rigid material is a rigid polymer matrix composite material.

7. An electrical raft according to any one of the preceding claims, wherein the collar is integrally formed from the rigid material of the raft.

8. An assembly of an electrical raft according to any one of the previous claims, and a flexible electrical harness (700) formed from a flexible printed circuit board (702) which provides a plurality of conductive tracks (704) and has one or more receiving holes (708) in a terminating region (706) of the harness, the holes extending to respective conductive tracks of the harness;
wherein the terminating region makes a press fit connection to the electrical connector, by which connection the terminating region is located in the recess and the second ends of the elongate terminals are received in the receiving holes to directly electrically connect the terminals with the conductive tracks.

9. An assembly according to claim 8, wherein the terminating region makes direct contact with the surface of the raft in the recess.

10. An assembly according to claim 8 or 9, wherein the terminating region has a core layer (722) through which the conductive tracks extend and a first elastomer layer (724) which is positioned between the core layer and the surface of the raft, the receiving holes extending through both the core layer and the first elastomer layer, wherein the first elastomer layer is compressed by the press fit connection of the terminating region to the electrical connector, forming a seal between the terminating region and the surface of the raft.

11. An assembly according to any one of claims 8 to 10, as dependent on claim 4, wherein the terminating region has a cap (718) at the side thereof distal from the surface of the raft, the cap having complimentary fastening formations to the fastening formations of the collar for joining the cap to the collar and thereby preventing the terminating region from being detached from the electrical connector.

12. An assembly according to claim 11, wherein the terminating region has a second elastomer layer (726) which is positioned between the core layer and the cap, and wherein the second elastomer layer is compressed by the joining of the cap to the ridge, forming a seal between the terminating region and the cap.

13. A gas turbine engine (10) or gas turbine engine installation, having an electrical harness comprising the electrical raft of any one of claims 1 to 7, or the assembly of an electrical raft and a flexible electrical harness according to any one of claims 8 to 12.

14. A method of manufacturing a gas turbine engine comprising:
attaching an electrical raft according to any one of claims 1 to 7 to the engine, and
electrically connecting a flexible electrical harness to the raft by press fitting the terminal region of the harness to the electrical connector of the raft.
